# EUROPEAN PATENT SPECIFICATION

(11) **EP 1 018 304 B1**
(45) Date of publication and mention of the grant of the patent: **04.05.2005**
(21) Application number: 00300066.8
(22) Date of filing: 06.01.2000
(51) Int. Cl.: A23L 1/216, A23P 1/14, A23L 1/217

(54) **Method of producing a dried potato snack product**
Verfahren zur Herstellung eines getrockneten Kartoffelsnacks
Méthode pour la préparation d'un produit alimentaire seché de type "snack" à base de pommes de terre

(30) Priority: 06.01.1999 JP 110699
(43) Date of publication of application: 12.07.2000
(73) Proprietor: Watanabe, Ikuku, Oita 874-0838 (JP)
(72) Inventor: Watanabe, Isao, Kanagawa 221-0861 (JP)
(74) Representative: Jones, Helen Marjorie Meredith

(56) References cited:
- GB-A- 2 111 816
- US-A- 5 560 287
- US-A- 5 676 989
- US-A- 5 753 291
- US-A- 5 802 959
- DATABASE WPI Derwent Publications Ltd., London, GB; AN 1974-84568V XP002179763 & CA 957 896 A

## Description

The present invention relates to a method for producing snack product in which no oil or a limited quantity of oil is used to the material.

In the general snack production, of potato chips or fried potatoes, potatoes are sliced or cut into sticks, the sticks are fried with oil, salts or other seasonings are sprayed onto the fried product.

As a result, many of the conventional snack products which are fried with oil tend to have a high calorific value. Nowadays, many people are health-oriented to such an extent that prevention of obesity and resultant diseases are drawing much public attention and snack products with low calorific values are much in demand.

Given the situation, it may be proposed that snack products are cooked without frying with oils. However, there are problems that such food lacks a sufficiently good taste and a crunching feel when chewed.

The present invention is provided to solve said problems and its object is to provide a method of producing snack products without frying with oil but having a crunching feel when chewed to the same extent as the conventional snack products while showing a low calorific value contributing to prevention of obesity and resultant adults' diseases.

Processes for making low-fat potato chips are described in the prior art. US Patent number 5, 802, 959 discloses an apparatus for preparing a snack food without the use of cooking oil.

US Patent number 5,676,989 teaches a method for preparing fat-free expanded potato chips, in which potato pieces are partially cooked, heated by means of electromagnetic radiation, followed by pressure reduction below atmospheric to provide an expanded product.

Canadian patent number 957,896 describes the use of centrifugal forces and steam to decrease the fat content of potato products.

The use of forced air convection heating and radiowaves to produce fat-free potato chips is further disclosed in US Patent number 5,560,287.

The present invention provides a method of producing a snack product comprising a first step of skin paring potatoes; a second step of slicing and pelletizing said skin pared potatoes in a predetermined thickness; a third step of steaming said pelletized potatoes; a fourth step of drying said steamed potatoes to remove moisture contained therein by means of far infared rays; a fifth step of heating and pressurising then inflating said dried potatoes; a sixth step of spraying a seasoning to said inflated potatoes; and a seventh step of drying said seasoning sprayed potatoes to remove the moisture therein by means of far infared rays.

It is preferable that said fifth step is conducted by non-oil spraying or said sixth step is conducted by spraying a limited quantity of oil.

Since the snack product produced by the method according to the present invention adopts the afore-mentioned structure, it is possible to obtain a sufficiently good taste and give a crunching feel when chewed while showing a low calorific value contributing to prevention of obesity and resultant adults' diseases.

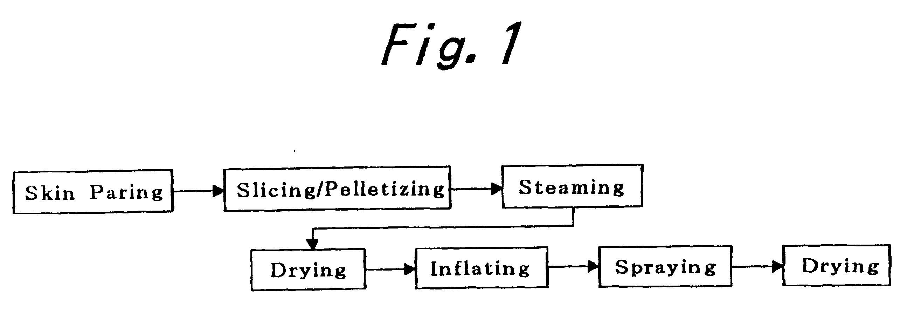

Figure 1 is a process drawing of one example of the method of making snack products according to the present invention.

Hereinafter, the invention relating to the method of producing a snack product will be explained.

The method of producing a snack product in the embodiment of the invention with reference to Figure 1. Therein, potatoes will be used as a raw material. Other root vegetables with similar water and carbohydrate content may be used as an alternative.

As a first step, potatoes are subjected to skin paring. Then, as a second step, said potatoes are sliced into a predetermined thickness, for instance in the range 2-10 mm, preferably 3-6 mm. If some of the sliced potatoes in said slicing step are or would be too big (for instance having a surface area of the major surface more than about 25 cm²), such potatoes are further pelletized by cutting in one perpendicular direction (to the original slicing direction) or two perpendicular directions, sequentially or simultaneously, for instance to form pellets having a width in the range 2 to 20 mm, preferably 3 to 10 mm, and average length in the range 10-200 mm, preferably 20-100 mm. As a third step, sliced or pelletized potatoes are steamed. As a fourth step, several of the steamed potato pellets are dried to reduce the percentage of the moisture contained therein down to a predetermined quantity for instance in the range 5-20% by weight. Use of far infrared rays allows drying in a short time and all the way to the cores thereof and gives a crunching feel when chewed.

Next, in a fifth step, the pellets dried to remove the moisture contained therein is heated, preferably at a temperature in the range 180 to 250°C, and pressurized preferably at a pressure in the range (1.5-30) x 10⁵Pa, preferably (2-5) x 10⁵Pa, by means of a heating/pressurizing device. Then, after a passage of a predetermined time said pellets are subjected to a lower, for instance atmospheric, pressure such that said pellets instantly inflate. The inflation may result in a volume expansion in the range 1.5-10 times, preferably at least 2 times. Then, as a sixth step, the thus inflated pellets usually as thin bars are subjected to spraying of seasonings including salt, glutamic acid, or other extracts (for example, beef extract) without oil or with a limited quantity of oil. Then again, as a seventh step, said pellets are dried by means of far infrared rays preferably to reduce the moisture content to a value in the range 2 to 10% by weight. Said drying may include a baking step. As a result, a product having taste while giving a crunching feel is produced.

Next, concrete examples in the embodiment explained with reference to Figure 1 will be given.

After the skin paring of potatoes, said skin pared potatoes are sliced to the predetermined size and thickness (for example, an area of 2cm², and the thickness of 4mm). If some of the sliced potatoes are too big, such potatoes are pelletized (chipped). Then, the pelletized potatoes are subjected to steam for heating the same.

Said pellets are heated by means of a far infrared dryer to reduce the percentage of moisture contained therein down to 5 to 20%. Then, said pellets are set in a heating/pressurizing device to heat and pressurize at a temperature of 180 to 250°C and under a pressure of 2,000 to 3,000 kg/cm² ((2-3) x 10⁵Pa) and then, are taken out therefrom such that the pellets inflate instantly.

The surfaces of said inflated potato pellets are seasoned by spraying thickened polysaccharides and dried again to reduce the percentage of the moisture contained therein down to 2 to 10% again by means of the far infrared dryer. As a result, a snack product having flavour and giving a crunching feel is produced.

In this connection, it was found to be most preferable that potato pellets containing moisture of 13% are heated and pressurized at a temperature of 200°C under the pressure of 2,500 kg/cm² (2.5 x 10⁵Pa) to reduce the moisture down to 4% because the thus dried snack product has a good taste and a crunching feel when chewed.

The present invention provides a low calorie and low fat snack product having an effect of preventing obesity and resultant adults' diseases by slicing a skin pared potatoes, pelletizing and steaming the same, inflating into a form of thin bars and drying substantially without oil such that the resultant product having an effect of giving a crunching feel when chewed is produced.

Further, said drying step uses far infrared rays such that the pellets are dried all the way to the cores thereof in a short time.

Further, since the skin pared potatoes are pelletized after a slicing step, the potato pellets are steamed, dried to remove the moisture therein, pressurized, inflated and sprayed such that the inflated pellets are coated with seasonings without oil or with a limited quantity of oil, the resultant snack product contains little fats except the material's own oils and fats. Moreover, it has an effect that the production process is simple and the low cost production of the snack product which is suited to mass production is possible.

## Claims

1. A method of producing a snack product comprising a first step of skin paring potatoes, a second step of slicing and pelletizing said skin pared potatoes in a predetermined thickness; a third step of steaming said pelletized potatoes; a fourth step of drying said steamed potatoes to remove moisture contained therein by means of far infrared rays; a fifth step of heating and pressurizing then inflating said dried potatoes; a sixth step of spraying a seasoning onto said inflated potatoes; and a seventh step of drying said seasoning sprayed potatoes to remove moisture therein by means of far infrared rays.

2. A method as set forth in claim 1, wherein said sixth step is conducted by spraying of oil-free components.

3. A method as set forth in claim 1, wherein said sixth step is conducted by spraying a limited quantity of oil.

4. A method according to any one of claims 1 to 3 in which the thickness of the pelletized potatoes produced in the second step is in the range 2 to 10mm, preferably 4mm.

5. A method according to any of claims 1 to 4 in which the temperature in the heating and pressurizing step is in the range 180 to 250°C, and the pressure is preferably in the range (2-3)x10⁵Pa.

6. A method according to any of claims 1 to 5 in which the moisture content after the fourth step is in the range 5 to 20% by weight and in which the moisture content after the seventh step is lower and is in the range 2 to 10% by weight.

## Patentansprüche

1. Verfahren zur Herstellung eines Snackprodukts, umfassend einen ersten Schritts des Schälens von Kartoffeln, einen zweiten Schritt des In-Scheiben-Schneidens und Zerkleinerns der geschälten Kartoffeln in einer vorbestimmten Dicke; einen dritten Schritt des Dämpfens der geschälten Kartoffeln; einen vierten Schritt des Trocknens der gedämpften Kartoffeln mittels Fern-Infrarot-Strahlen zur Entfernung der Feuchtigkeit, die darin enthalten ist, einen fünften Schritt des Erwärmens und Unter-Druck-Setzens, dann Aufgehenlassens der getrockneten Kartoffeln, einen sechsten Schritt des Aufsprühens eines Gewürzes auf die aufgegangenen Kartoffeln; und einen siebten Schritt des Trocknens der mit Gewürz besprühten Kartoffeln mittels Fem-Infrarot-Strahlen zur Entfernung der Feuchtigkeit darin.

2. Verfahren nach Anspruch 1, in dem der sechste Schritt durch Aufsprühen von ölfreien Komponenten durchgeführt wird.

3. Verfahren nach Anspruch 1, in dem der sechste Schritt durch Aufsprühen einer begrenzten Ölmenge durchgeführt wird.

4. Verfahren nach irgendeinem der Ansprüche 1 bis 3, in dem die Dicke der zerkleinerten Kartoffeln, die im zweiten Schritt hergestellt werden, im Bereich von 2 bis 10 mm, bevorzugt bei 4 mm liegt.

5. Verfahren nach irgendeinem der Ansprüche 1 bis 4, in dem die Temperatur in dem Schritt des Erwärmens und Unter-Druck-Setzens im Bereich von 180 bis 250°C liegt und der Druck bevorzugt im Bereich von (2 - 3) x 10⁵ Pa liegt.

6. Verfahren nach irgendeinem der Ansprüche 1 bis 5, in dem der Feuchtigkeitsgehalt nach dem vierten Schritt im Bereich von 5 bis 20 Gew.-% liegt und in dem der Feuchtigkeitsgehalt nach dem siebten Schritt niedriger ist und im Bereich von 2 bis 10 Gew.-% liegt.

## Revendications

1. Procédé de production d'un produit de type snack comprenant une première étape consistant à éplucher des pommes de terre, une deuxième étape consistant à découper en tranches et agglomérer en boulettes lesdites pommes de terre épluchées selon une épaisseur prédéterminée ; une troisième étape consistant à cuire à la vapeur lesdites pommes de terre en boulettes, une quatrième étape consistant à sécher lesdites pommes de terres vapeur pour éliminer l'humidité contenue à l'intérieur au moyen de rayons infrarouges lointains ; une cinquième étape consistant à chauffer et pressuriser et gonfler ensuite lesdites pommes de terre séchées ; une sixième étape consistant à pulvériser un assaisonnement sur lesdites pommes de terre gonflées ; et une septième étape consistant à sécher lesdites pommes de terre assaisonnées pour éliminer l'humidité à l'intérieur au moyen de rayons infrarouges lointains.

2. Procédé selon la revendication 1, dans lequel ladite sixième étape est opérée en pulvérisant des éléments exempts d'huile.

3. Procédé selon la revendication 1, dans lequel ladite sixième étape est opérée en pulvérisant une quantité d'huile limitée.

4. Procédé selon l'une quelconque des revendications 1 à 3, dans lequel l'épaisseur des pommes de terre en boulettes produites pendant la deuxième étape se situe dans la plage de 2 à 10 mm et est de préférence de 4 mm.

5. Procédé selon l'une quelconque des revendications 1 à 4, dans lequel la température pendant l'étape de chauffage et de pressurisation est dans la plage de 180 à 250°C, et la pression est de préférence dans la plage de (2-3)x10⁵ Pa.

6. Procédé selon l'une quelconque des revendications 1 à 5, dans lequel la teneur en humidité après la quatrième étape est dans la plage de 5 à 20 % en poids et dans lequel la teneur en humidité après la septième étape est plus faible et est dans la plage de 2 à 10 % en poids.
